# EUROPEAN PATENT APPLICATION

(11) **EP 1 529 738 A1**
(43) Date of publication of application: **11.05.2005**
(21) Application number: 04255933.6
(22) Date of filing: 29.09.2004
(51) Int. Cl.: B65D 75/00, B65D 51/28

(54) **Cup lid retaining a sealed media disc**

(30) Priority: 04.11.2003 US 702153
(71) Applicant: Encore Holdings Limited, Nassau (BS)
(72) Inventor: Choi, King Yeung, 16th Floor,, Hong Kong (HK)
(74) Representative: Banford, Paul Clifford

(57) **Abstract**

A media disc (13) has a label face, a media retrieval face and a central aperture (25) extending between the faces. A flexible wrapping (16) covers both of the faces and extends through the aperture to seal the media disc. The flexible wrapping is typically a shrink-wrap. A beverage cup lid (15) has a central boss (17) passing through the central aperture (25) of the media disc to retain the media disc.

## Description

### Background of the Invention

The present invention relates to a cup lid retaining a sealed media disc. More particularly, although not exclusively, the invention relates to a disposable lid having attached thereto a shrink-wrapped media disc and wherein a straw can be inserted through the centre aperture of the disc and lid to imbibe a beverage from a cup to which the lid is attached with the disc in place thereon. The invention also relates to a media disc having a central aperture, wherein the disc is shrink-wrapped and sealed at its periphery and at the aperture - leaving the aperture open for insertion of the disc upon an aperture-penetrating boss.

It is known to provide media discs upon the lid of a disposable cup. An example is shown in US Patent Number 6,070,752. This patent shows a disposable lid comprising an inner member 12 and an outer member 14 between which a disc is housed upon a cup. In this example, an attempt is made to seal the media disc from moisture by sandwiching it between two separate members. The cost of the lid is high because of the necessity for two separately moulded parts -- the upper and lower members.

### Objects of the Invention

It is an object of the present invention to overcome or substantially ameliorate the above disadvantage and/or more generally to provide and improved cup lid retaining a sealed media disc and a cost-effective means of sealing a media disc leaving its central aperture open to enable the disc to be mounted upon a mounting boss through which a straw can pass.

### Disclosure of the Invention

There is disclosed herein a combination comprising a media disc having a label face, a media retrieval face and a central aperture extending between said faces, and a flexible wrapping covering both said faces and extending through the aperture to seal the media disc.

Preferably, the flexible wrapping comprises an upper sheet covering the label face and a lower sheet covering the media retrieval face, wherein the upper sheet is attached to the lower sheet at the disc aperture and wherein neither the upper sheet nor the lower sheet extend fully across the aperture.

Preferably, the upper sheet is secured to the lower sheet at a periphery of the media disc.

Preferably, the flexible wrapping is a shrink-wrapped and wherein the upper sheet is attached to the lower sheet at the disc aperture by heating.

There is further disclosed herein a beverage cup lid having a central boss passing through the central aperture of the sealed media disc disclosed above.

Preferably the central boss has a protrusion over which the media disc snaps to secure the media disc to the lid.

Preferably the central boss has a slitted opening through which a straw can pass.

There is further disclosed herein a beverage cup lid having a peripheral lip within which the above disclosed sealed media disc snaps to secure the media disc to the lid.

Preferably there is a slitted opening in the lid through which a straw passing through the central aperture of the disc can pass.

### Brief Description of the Drawings

A preferred form of the present invention will now be described by way of example with reference to the accompanying drawings, wherein:
Fig. 1 is a schematic cross-sectional elevation of a cup having a lid upon which a sealed media disc is mounted,
Fig. 2 is a schematic cross-sectional elevation of the lid and sealed media disc,
Fig. 3 is a schematic plan view of the lid of Fig. 2,
Fig. 4 is a schematic cross-sectional elevation of an alternative lid and sealed media disc,
Fig. 5 is a schematic parts-exploded cross-sectional elevation of the lid of Fig. 4,
Fig. 6 is a schematic plan view of the lid of Fig. 5,
Fig. 7 is a schematic cross-sectional elevation of a further alternative lid and sealed media disc,
Fig. 8 is a schematic plan view of the lid of Fig. 7, and
Fig. 9 is a schematic cross-sectional elevation of a sealed media disc.

### Description of the Preferred Embodiment

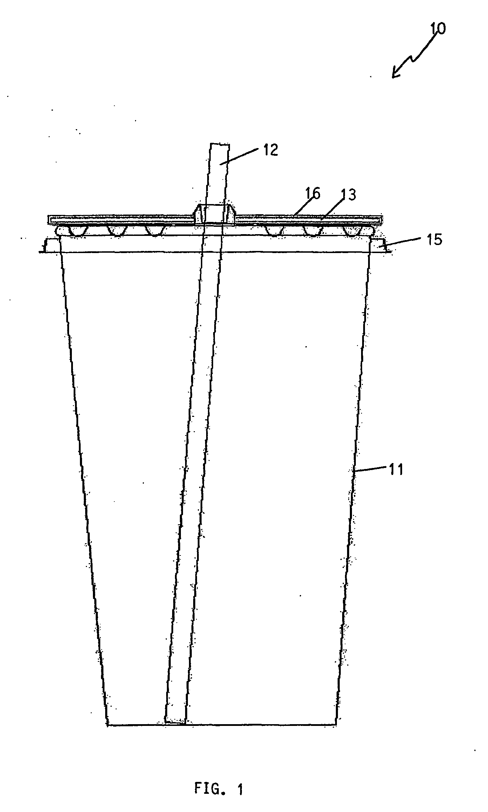

In Fig. 1 of the accompanying drawings there is depicted schematically a combination of a lid 15 and sealed media disc 13 upon a beverage cup 11. A straw 12 passes through a central aperture of the sealed media disc and the lid to enable a beverage within the cup to be imbibed with the lid and sealed media disc in place.

The combination of lid 15 and sealed disc 13 is better depicted in Figs. 2 and 3. The lid 15 is made of a flexible light-transmissive plastics material known in the art of disposable beverage cup lids. The lid 15 comprises a plurality of annular disc-support ribs at the centre of which there is a small platter from which their extents upwardly a boss 17 having a lip 17' of slightly larger diameter than the diameter of the central aperture of the media disc 13. This enables the disc to be snap-engaged upon the lid 15. The centre of the boss 17 has a pair of crossed slits 18 defining an openable aperture through which the straw 12 can be pushed.

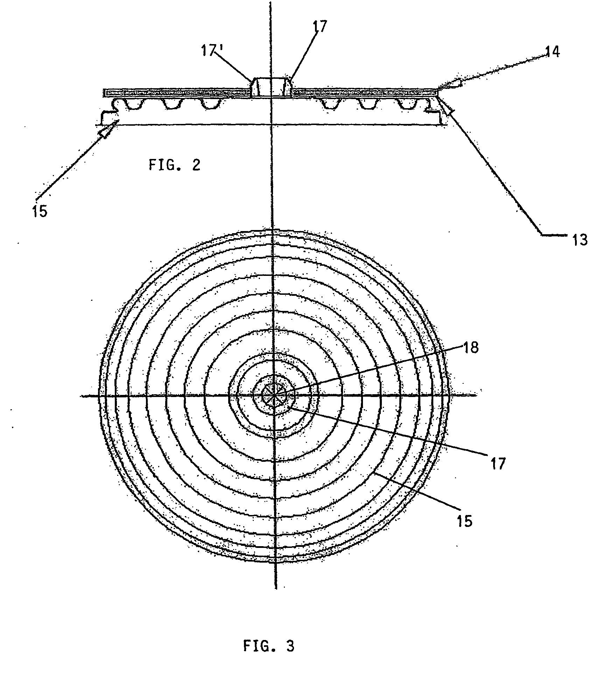

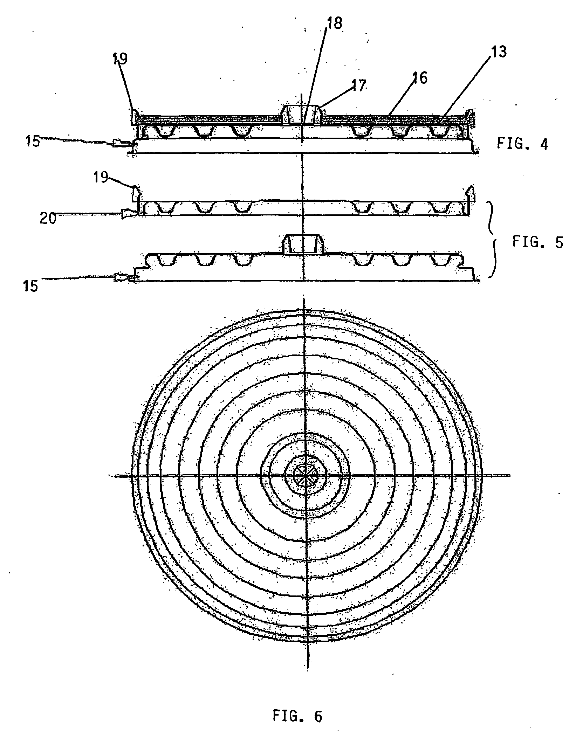

In Figs. 4, 5 and 6 there is depicted a combination comprising the lid 15 and covered disc 13 as well as an additional disc retainer 20 that fits upon the lid 15. The disc retainer is fixed upon the lid 15 by snap-engagement upon the lid's boss 17. The disc retainer comprises a peripheral lip 19 that snaps over the periphery of the covered disc to assist in retaining the disc upon the lid.

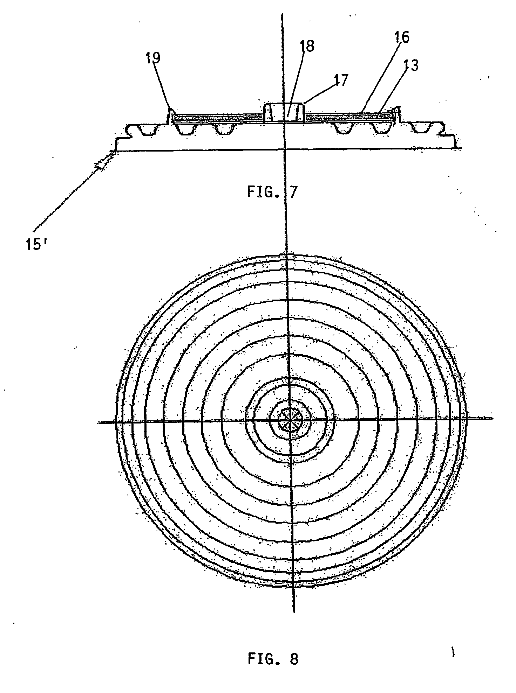

Yet a further embodiment is shown in Figs. 7 and 8. In this embodiment, the media disc 13 is somewhat smaller and an annular lip 19 is formed integrally with the lid 15'. In this embodiment, the central boss 17 does not have a lip, so reliance is placed entirely on lip 19 to secure the covered disc upon the lid. The boss 17 has a pair of crossed slits 18 defining an aperture through which a straw can pass.

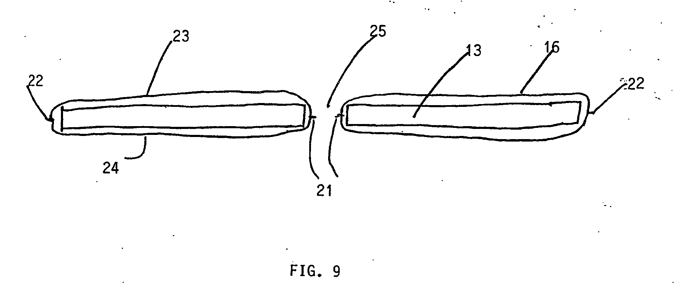

The sealed media disc 13 is better-depicted in Fig. 9. The disc cover 16 comprises a plastics shrink-wrap having an upper sheet 23 and a lower sheet 24 secured at a seam 22 about the periphery of the disc 13 by the application of heat from a heating jig for example. The shrink-wrap is typically formed of transparent heat-shrink plastics. At the central aperture 25 of the disc 13, a seam 21 connects the upper sheet 23 and lower sheet 24. The seam 21 might be formed by the application of heat from a heating jig. The seam is made in such manner that the central aperture 25 is not closed or covered by the disc cover 16. This enables the sealed disc to be placed upon the boss 17 of the lid without penetration or rupturing of the cover 16. The seam 21 and adjoining portions of the upper and lower sheet is would be pressed tightly between the central aperture of the disc 13 and the retaining boss 17 of the lid. Due to the seams 21 and 22 the disc 13 remains sealed from condensation or moisture and spillage as might occur during consumption of a beverage from the cup 11.

It should be appreciated that modifications and alterations obvious to those skilled in the art are not be considered as beyond the scope of the present invention. For example, the upper and lower sheets 23 and 24 of the disc cover 16 might not be sealed that 21, in which case a fluid-tight sealed might be made by virtue of contact of the inner peripheries of the upper and lower sheets 23 and 24 against the outside surface of the boss 17.

## Claims

1. A sealed media disc having a label face, a media retrieval face and a central aperture extending between the faces, and a flexible wrapping covering both the faces, **characterised in that** the wrapping extends through the aperture to seal the media disc.

2. The sealed disc of Claim 1, **characterised in that** the flexible wrapping comprises an upper sheet covering the label face and a lower sheet covering the media retrieval face, and **in that** the upper sheet is attached to the lower sheet at the disc aperture and neither the upper sheet nor the lower sheet extend fully across the aperture.

3. The sealed disc of Claim 2, further **characterised in that** the upper sheet is secured to the lower sheet at a periphery of the media disc.

4. The sealed disc of Claim 2, further **characterised in that** the flexible wrapping is a shrink-wrap and wherein the upper sheet is attached to the lower sheet at the disc aperture by heating.

5. The sealed disc of any one of the preceding claims attached upon a beverage cup lid having a central boss passing through the central aperture of the media disc.

6. The sealed disc and cup lid of Claim 5, further **characterised in that** the central boss has a protrusion over which the media disc snaps to secure the media disc to the lid.

7. The sealed disc and cup lid of Claim 6, further **characterised in that** the central boss has an opening with slits through which a straw can pass.

8. The sealed disc of Claim 1 attached upon a beverage cup lid having a peripheral lip within which the sealed disc snaps to secure the sealed disc to the lid.

9. The sealed disc and cup lid of Claim 8, further **characterised by** an opening with slits at the centre of the lid through which a straw can pass through the central aperture of the disc.
